# EUROPEAN PATENT SPECIFICATION

(11) **EP 2 162 625 B1**
(45) Date of publication and mention of the grant of the patent: **06.01.2016**
(21) Application number: 08770905.1
(22) Date of filing: 12.06.2008
(51) Int. Cl.: F16B 37/04

(54) **APPARATUS AND METHODS FOR SECURING A FASTENER**
VORRICHTUNGEN UND VERFAHREN ZUM ANBRINGEN EINES BEFESTIGUNGSELEMENTS
APPAREIL ET PROCÉDÉS DE FIXATION D'UNE ATTACHE

(30) Priority: 13.06.2007 US 762757; 19.10.2007 US 875812
(43) Date of publication of application: 17.03.2010
(73) Proprietor: The Monadnock Company, City Of Industry, CA 91748 (US)
(72) Inventor: KOMSITSKY, Igor, Los Angeles, CA (US); CSIK, Terrence, Pasadena, CA 91107 (US)
(74) Representative: Ipside
(86) International application number: PCT/US2008/066792
(87) International publication number: WO 2008/157265

(56) References cited:
- GB-A- 565 192
- GB-A- 585 948
- GB-A- 782 428
- JP-A- 2006 038 201
- US-A- 2 344 102
- US-A- 2 477 429
- US-A- 2 991 816
- US-A- 3 646 982
- US-A1- 2004 202 523
- US-A1- 2004 202 523
- US-B2- 6 918 725

## Description

### BACKGROUND

### Field

This relates to fastener receivers, for example nut plates. This also relates to fasteners, for example clip nut fasteners, nut cages and similar assemblies, methods of forming fasteners, methods of assembling fasteners, methods of securing panels and other components with fasteners and assemblies using such fasteners.

### Related Art

Nut plates include a base or bottom plate supporting a nut or similar fastener element. The nut plate helps to hold components, for example panels, together when a fastener is engaged with the nut and tightened down. The nut receives a bolt, screw or other threaded element passed through the hole and threaded into the nut. Nut plates may be used in automobiles, appliances and aircraft, as well as in other applications.

In aircraft applications, the types and numbers of fasteners add significant weight to the final assembly. Panel fasteners, for example, may have a number of parts, most or all of which are metal. Metal is used for strength, corrosion resistance and other factors. However, the metal parts add appreciable weight to the final assembly. If the weight of a given part could be reduced, because of the number of individual parts, even small weight reductions in an individual component may add up to a significant weight reduction overall. Additionally, some metal materials may still experience some corrosion and may also be incompatible with surrounding materials.

### SUMMARY

Fastener assemblies can be made that are lightweight, easy to assemble, and/or have a high load capability. A fastener assembly can also be made such that it is easier to maintain, as well as to allow easier maintenance of hardware secured by the fastener assembly. Fastener assemblies including nut plates are described that are easy to assemble, lightweight and more corrosion resistant than many conventional nut plates. Additionally, the fastener may be configured to be more compatible with composite structures. The described fastener assemblies including nut plates may also be easy to manufacture.

In one example of a fastener receiver or support for a fastener element, the support includes a base for being supported on a support surface. The base includes a structure for supporting a fastener element wherein the structure is at least partly non-symmetrical about a plane other than a horizontal plane parallel to the base. For example, the structure is non-symmetrical about a vertical transverse plane. In another example, the structure is symmetrical about one vertical plane and non-symmetrical about another vertical plane, for example symmetrical about a longitudinal vertical plane and non-symmetrical about a transverse vertical plane where the two vertical planes are perpendicular to each other. In one configuration, the fastener element may be movable in several directions in a plane substantially parallel to the base, and the structure has barriers limiting movement of the fastener element in one direction different than barriers limiting movement of the fastener element in an opposite direction. In another configuration, the fastener element can be inserted and removed from only one side of the support.

In another example of a fastener receiver or support for a fastener element, the support includes a base for being supported on a support surface. The base can be substantially planar. One side of the base contacts the support surface, and the other side of the base supports the fastener element. In one example, the fastener element is inserted into and removed from the base from only one side of the base, for example in a direction parallel to the base. In another example, the fastener element is limited in its ability to pivot relative to the support by opposite side walls, and in another example the fastener element is limited in its ability to pivot relative to the support by opposite side walls and an end wall, for example an end wall between the opposite side walls. The opposite side walls can be substantially mirror images of each other, and may be substantially parallel to each other.

In a further example, a fastener receiver or support for a fastener element can include a support element for the fastener element and a structure on the support element for receiving the fastener element. The structure includes an opening configured to allow insertion and removal of the fastener element through the opening in a direction at least partly parallel to the support element. In one configuration, the opening allows insertion and removal in only one direction, for example from a front of the structure. A portion of the structure opposite the opening has at least one barrier, boss, post or bearing surface for limiting movement of the fastener element away from the opening. The at least one limiting element, for example barrier or bearing surface, can also limit pivoting of the fastener element relative to the structure.

In any of the foregoing examples, the fastener receiver can have a flat surface on the base for contacting the support surface, means for securing the fastener receiver to the support surface (for example, but not limited to rivets, bolts, or other fasteners, adhesive, adhesive tape, double-sided adhesive tape, sonic welding, bonding agents or other means for fixing the fastener receiver to the support surface). They can also be configured to allow the fastener element, such as a nut, to float and/or pivot a desired amount relative to the support. Floating can be used to allow self-adjustment, and pivoting can be used to position the fastener element relative to the support so as to bear against multiple bearing surfaces to absorb loading applied to the fastener element. They can also be configured to allow releasable retention of the fastener element, for example through a restricted opening in the side of the structure whereby insertion and removal of the fastener element is accomplished through application of a non-trivial force in a given direction. Additionally, they can be configured so that the fastener element occupies a given surface area and a bearing structure occupies a surface area of comparable magnitude along at least one side of the fastener element, which may also be along opposite sides of the fastener element, or about three or more sides of the fastener element. They may also be configured to accommodate a fastener element having a relatively planar support structure and an at least partially cylindrical fastening structure for receiving a complementary fastener element wherein the cylindrical structure is partially surrounded by a wall in the fastener receiver.

In another example, a fastener receiver is provided having a non-metal support and fastener cage integral with each other. The support is supported on one surface and the fastener cage is opposite the surface. The support extends in substantially two dimensions, and in one example is substantially planar. In another example, the support includes an opening for receiving a shank or shaft of a fastener element to be engaged with a corresponding fastener element in the fastener cage, and no portion of the support extends around and reverses itself on the support to be spaced apart from the opening. In this example, the support can be curved rather than precisely planar, while still not curving or turning back on itself. In one example, the non-metal support and fastener cage are molded plastic, and can be formed from a material such as TORLON. In another example, the support can include one or more securing portions, and in the case of plural securing portions, a second securing portion can be on a side of the fastener cage opposite the first securing portion. In another example, a second securing portion can be positioned other than on an opposite side of the fastener cage from the first securing portion. For example, first and second securing portions can be at right angles to each other, on the same side of the fastener cage, or otherwise.

In a further example, a fastener receiver has a non-metal support and fastener cage integral with each other wherein the fastener cage includes an opening in a side of the fastener cage. The opening can be used to insert a fastener into and remove a fastener from the fastener cage. In one example, the side opening is the only way for inserting and removing the fastener element. In another example, the fastener cage includes an opening in a front of the fastener cage. The front opening can be used to insert a fastener into and remove a fastener from the fastener cage. In this example, the front opening may be the only way for inserting and removing the fastener element.

In an additional example of a fastener receiver having a non-metal support and fastener cage integral will each other, the fastener cage can have multiple surfaces against which corresponding surfaces on a fastener element can bear when the fastener element pivots. In the example, the fastener cage includes at least two surfaces against which corresponding surfaces on the fastener element bear at the same time when the fastener element pivots. The at least two surfaces can be side surfaces in the fastener cage, such as oppositely facing side surfaces. The fastener cage can also include one additional surface against which corresponding surfaces on the fastener element can bear, preferably simultaneously, when the fastener element pivots. For example, additional surfaces can be provided by a post, column or other bearing surface located between oppositely facing side surfaces in the fastener cage and extend upward from a fastener support surface. Where the fastener includes a base, such as one having an "H" configuration, the base can include tips configured so that three tips surfaces engage bearing surfaces in the fastener cage when the fastener element pivots.

In another example of a fastener receiver, the fastener receiver includes a support and a fastener cage on the support for receiving a fastener element. The fastener cage includes an upper portion for receiving a portion of a fastener element body. The cage upper portion extends substantially parallel to the support and includes an opening through the upper portion where the wall defining the opening extends through an angle less than 360 degrees. In one example, the wall extends in a substantially partial circle, and in another example, the wall extends about 255 degrees. In one example, the opening includes an entrance spacing having a width sufficiently less than an outside dimension of the fastener element body so that some force is used to insert and withdraw the fastener element from the cage. In one configuration, the entrance is positioned on a longitudinally-extending side of the fastener receiver. In another configuration, the fastener cage can include side walls extending from the support to the cage upper portion for providing bearing surfaces against which a fastener element can bear when the fastener element pivots. Additionally, a post or column can extend between the support and the cage upper portion for providing additional bearing surfaces.

In a further example of a non-metal fastener receiver, a fastener having a base is positioned in the fastener receiver above a support panel. The fastener base and the support panel have approximately the same height. Additionally, the fastener cage has a height above the support approximately twice the base height. For example, the cage can include an upper support panel for supporting the fastener from above, and the material thickness of the support panel can be approximately the same as the base height. Furthermore, side walls extending between the support and the upper support panel can extend a height slightly greater than a height of the fastener base. In this configuration, the support represents approximately a third of the height of the fastener receiver, the side walls represent approximately a third of the height of the fastener receiver, and the upper support wall thickness represents approximately a third of the height of the fastener receiver. In one configuration, the fastener receiver is molded to have the described configuration.

In any of the foregoing examples, the fastener receiver or support for a fastener element includes a support element for the fastener element and a structure on the support element for receiving the fastener element. three bearing or pivot-preventing surfaces are provided and are contacted when a fastener element is supported by the support element and pivots in one direction, and in another example when the fastener element pivots in two different directions, such as in opposite directions. The bearing surfaces can be walls, posts, columns, bosses, and relatively fixed structures.

These and other examples are set forth more fully below in conjunction with drawings, a brief description of which follows.

### BRIEF DESCRIPTION OF THE DRAWINGS

FIG. 1 is an upper left front isometric view of a fastener receptacle and fastener element in the form of a nut plate assembly.
FIG. 2 is a front and slightly upper isometric view of the fastener receptacle and fastener element of FIG. 1.
FIG. 3 is a front elevation view of the fastener receptacle and fastener element of FIG. 1.
FIG. 4 is a top plan view of a fastener element for use in the assembly of FIG. 1.
FIG. 5 is an upper left front isometric view of the fastener receptacle of FIG. 1.
FIG. 6 is a top plan view of the fastener receptacle of FIG. 1.
FIG. 7 is a front elevation view of the fastener receptacle of FIG. 1.
FIG. 8 is a back elevation view of the fastener receptacle of FIG. 1.
FIG. 9 is a side elevation view of the fastener receptacle of FIG. 1.
FIG. 10 is a bottom plan view of the fastener receptacle of FIG. 1.
FIG. 11 is a transverse vertical cross-section of the fastener receptacle of FIG. 1 taken along line 11-11 of FIG. 6.
FIG. 12 is a longitudinal vertical cross-section of the fastener receptacle of FIG. 1 taken along line 12-12 of FIG. 6.
FIG. 13 is a horizontal cross-section of the fastener receptacle of FIG. 1 taken along line 13-13 of FIG. 7.
FIG. 14 is a side elevation and partial section view of a fastener assembly in a configuration to secure structures together, for example a structure and a panel.
FIG. 22 is an upper isometric view of a fastener and fastener receptacle combination having mounting elements on a single side of a fastener cage.
FIG. 23 is a left side elevation view of the combination of FIG. 22.
FIG. 24 is a front elevation view of the combination of FIG. 22.
FIG. 25 is a vertical sectional view of the combination of FIG. 22 taken along line 25-25 in FIG. 24.
FIG. 26 is a horizontal section view of the combination of FIG. 22 taken along line 26-26 of FIG. 24.
FIG. 27 is a side elevation view of an eyelet for use as part of a mounting portion in the example shown in FIGS. 22-26, as well as any of the other mounting portions described herein.
FIG. 28 is a horizontal section view similar to that of FIG. 26 of an alternative combination of a fastener and fastener receptacle combination.
FIG. 29 is a left rear upper isometric view of another example of a fastener receptacle.
FIG. 30 is a top plan view of the receptacle of FIG. 29.
FIG. 31 is a lower left rear isometric view of the fastener receptacle of FIG. 29.
FIG. 32 is an upper rear isometric view of another example of a fastener receptacle having a curved support surface.
FIG. 33 is a rear elevation view of the fastener receptacle of FIG. 32.
FIG. 34 is a lower rear isometric view of a fastener receptacle having a curved support surface.
FIG. 35 is an upper front right isometric view of the fastener receptacle of FIG. 34.
FIG. 36 is a longitudinal vertical section view of the receptacle of FIG. 34.
FIG. 37 is a front elevation view of another example of a fastener receptacle.
FIG. 38 is a top plan view of the receptacle of FIG. 37.
FIG. 39 is a rear upper isometric view of the receptacle of FIG. 37.
FIG. 40 is a horizontal section view of the receptacle of FIG. 37 taken along line 40-40 of FIG. 41.
FIG. 41 is a left side elevation view of the receptacle of FIG. 37.
FIG. 42 is an upper left isometric view of another example of a fastener and receptacle combination.
FIG. 43 is an example of a fastener element that can be used in the combination of FIG. 42, or any of the other fastener receptacles described herein.
FIG. 44 is an example of another fastener element that can be used in the combination of FIG. 42, or any of the other fastener receptacles described herein.

### DETAILED DESCRIPTION

This specification taken in conjunction with the drawings sets forth examples of apparatus and methods incorporating one or more aspects of the present inventions in such a manner that any person skilled in the art can make and use the inventions. The examples provide the best modes contemplated for carrying out the inventions, although it should be understood that various modifications can be accomplished within the parameters of the present inventions.

Examples of fastener assemblies and of methods of making and using the fastener assemblies are described. Depending on what feature or features are incorporated in a given structure or a given method, benefits can be achieved in the structure or the method. For example, fastener assemblies with a nut element held in a nut receptacle or support having substantial bearing surfaces may be easier to use and maintain. Fastener assemblies with nut elements having simple attachment elements may be easy to install and maintain. Additionally, some fastener assembly configurations may also benefit from lighter-weight components, lower manufacturing cost and improved material compatibility and corrosion resistance. In some configurations of fastener assemblies, improvements can be achieved also in assembly, such as with symmetric nut elements, where insertion of the nut element into a nut cage is easier. Additionally, nut cage configurations can improve the integrity of the final assembly, and may reduce the possibility of part failure.

Improvements are also provided to components with which the fastener assemblies may be used. For example, panels using the fastener assembly may be simplified or may be assembled more efficiently. Additionally, the fastener assembly may be configured to permit the bolt or other mating fastener element to be secured more easily.

These and other benefits will become more apparent with consideration of the description of the examples herein. However, it should be understood that not all of the benefits or features discussed with respect to a particular example must be incorporated into a fastener assembly, component or method in order to achieve one or more benefits contemplated by these examples. Additionally, it should be understood that features of the examples can be incorporated into a fastener assembly, component or method to achieve some measure of a given benefit even though the benefit may not be optimal compared to other possible configurations. For example, one or more benefits may not be optimized for a given configuration in order to achieve cost reductions, efficiencies or for other reasons known to the person settling on a particular product configuration or method.

Examples of fastener assembly configurations and of methods of making and using the fastener assemblies are described herein, and some have particular benefits in being used together. However, even though these apparatus and methods are considered together at this point, there is no requirement that they be combined, used together, or that one component or method be used with any other component or method, or combination. Additionally, it will be understood that a given component or method could be combined with other structures or methods not expressly discussed herein while still achieving desirable results.

It should be understood that terminology used for orientation, such as front, rear, side, left and right, upper and lower, and the like, are used herein merely for ease of understanding and reference, and are not used as exclusive terms for the structures being described and illustrated.

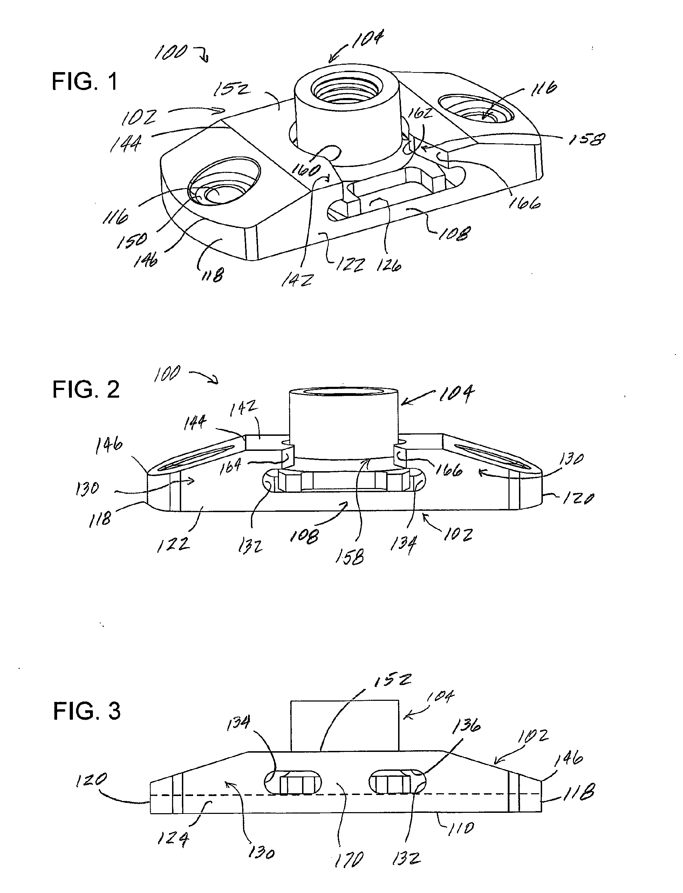

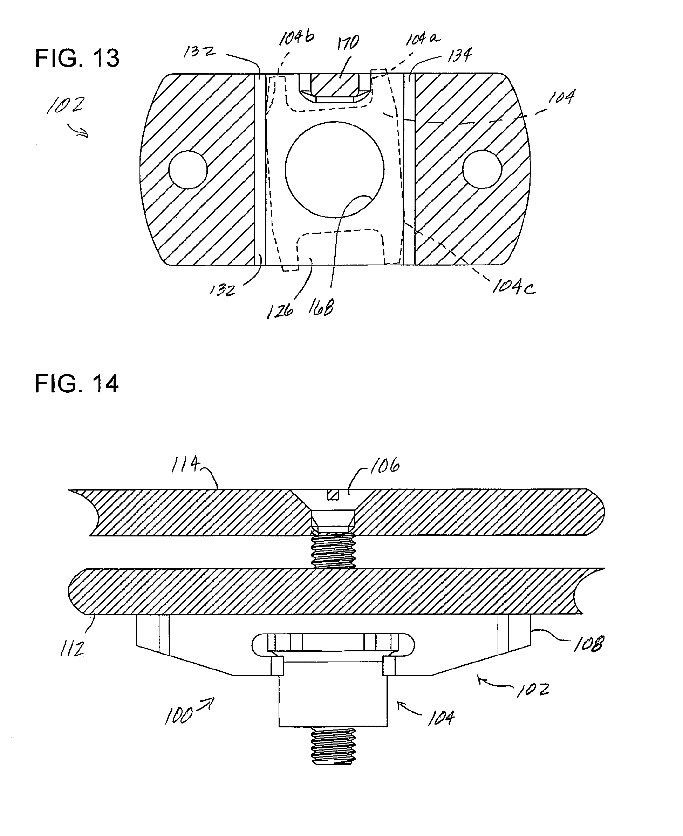

In one example of a fastener assembly (FIGS. 1-14), a fastener assembly in the form of a nut plate 100 (FIGS. 1-3 and 14) includes a fastener receiver in the form of a receptacle 102 (FIGS. 1-14). The fastener receptacle supports a fastener element, in the present example a nut element 104 (FIGS. 1-3 and 14). The nut element 104 receives a complementary fastener such as bolt 106 (FIG. 14). The fastener assembly may or may not include the bolt 106, depending on whether or not the assembly is combined and sold with or without the bolt 106, for example.

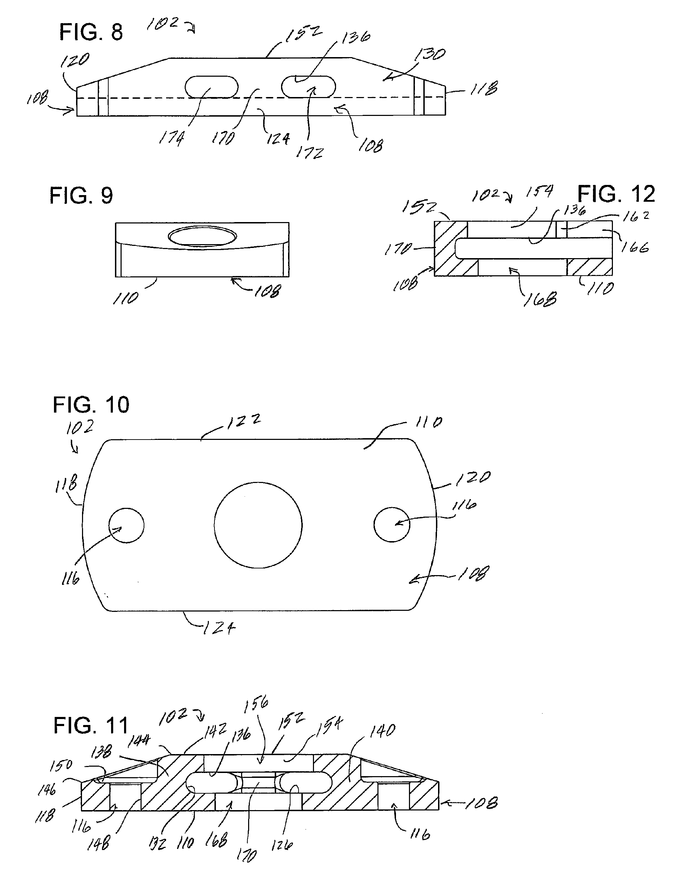

The plate 102 includes a base 108 having an outward facing surface 110 (FIG. 10) for being supported on a support surface 112 (FIG. 14). The support surface 112 may be a frame structure, bulk head or other structural support. The bolt 106 extends through a panel or other component 114 and threads into the nut element 104 for securing the component 114 to the structure 112. In other configurations, the nut element 104 and bolt 106 may be otherwise configured to be secured together through means other than threads, such as detents, pins and grooves, latches, locking elements or the like.

The outward facing surface 110 may be formed on a mounting plate, planar member, tab or tab combination, a plurality of wings, or other surfaces for helping to support the nut plate on the support surface 112. In the present examples, the outward facing surface 110 is formed on the base 108, which is a substantially planar plate member, and the outward facing surface 110 is substantially flat. The base 108 includes structures for mounting the base to the support surface 112. In one example, the base 108 includes openings 116 (FIGS. 1, 6 and 10) for receiving fasteners, for example rivets, threaded fasteners, and the like. The openings can be reinforced with respective eyelets (not shown), which may have cylindrical walls extending into the openings 116 and a perpendicular rim extending outward from the cylindrical wall. In addition, or alternatively, the openings can help to hold adhesives, films, double-stick tape or other pressure sensitive adhesives, or other bonding elements for holding the nut plate on the support surface. In the examples of bonding agents or adhesives that might be flowable, such material may extend into the openings, may extend over the upper edges of the openings, and may also extend over part or all of the upper surfaces of the base. Contact of the material with the adjacent surface(s) of the base help to hold the nut plate in place. Engagement between the material and the adjacent edges of the nut plate help to hold the nut plate in place. Eyelets may be used in or around the openings to help resist loading forces that may be experienced through the nut plate when held in place through the mounting fasteners. Where adhesives, films, double-stick tape or other pressure sensitive adhesives, or other bonding elements are used, openings can also be omitted, with the bonding element holding the nut plate to the support surface through an appropriate bonding surface on the nut plate.

The outward-facing surface 110 can incorporate a smooth or non-smooth surface adjacent to the intended support surface. A non-smooth surface can be textured, roughened, knurled, abraded, peened, inclusive of one or more projections or depressions, or otherwise varied. This non-smooth surface condition may improve the strength characteristics when joined to the support surface. The improved strength characteristics relate to the effectiveness of the attachment method of the nut plate with the intended support surface, which can include but is not limited to, peel, push-out, torque-out, and incidental jarring or hitting (with another object) of the attached nut plate.

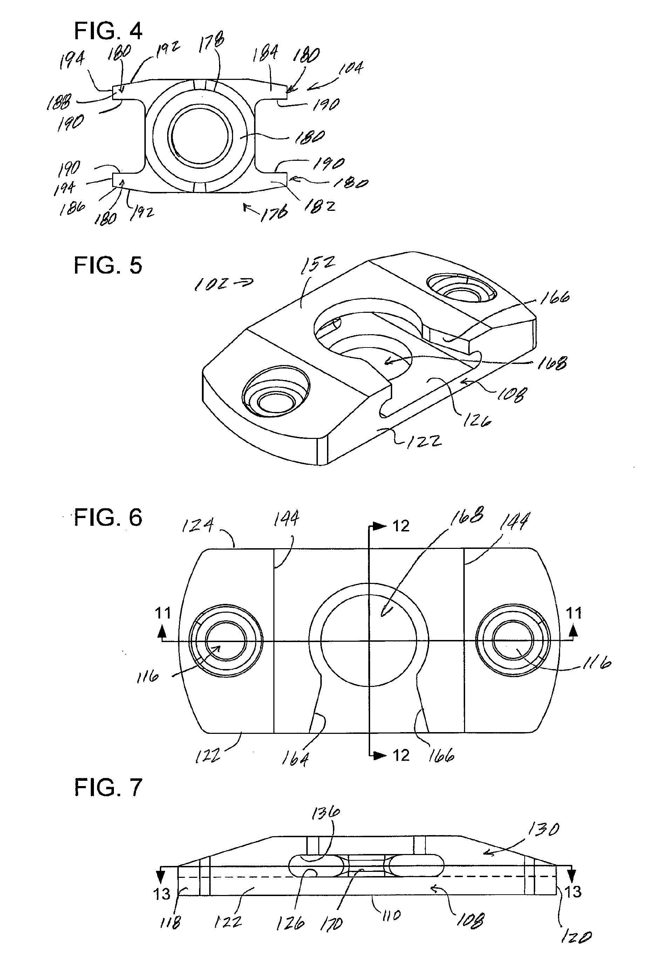

In the present example, the base 108 is a substantially planar structure extending from a left side 118 to a right side 120. The base extends from a front surface 122 to a rear surface 124 (FIGS. 3 and 6). In plan view (FIG. 10), the front and rear surfaces 122 and 124, respectively, are substantially straight and parallel to each other, and the left and right sides are slightly curved or have a radius. The base may have other profiles, however. The sides and front and rear surfaces extend substantially perpendicular to the outward facing surface 110. The base extends upward to an upper base surface 126 (FIGS. 1, 5 and 11). The upper base surface 126 supports the nut element 104. The upper base surface 126 is substantially flat and supports a substantially flat lower surface of the nut element 104. The upper base surface 126 allows the nut element 104 to pivot and/or float. The base forms a substantially planar support for the nut element, and one side of the base contacts the support structure to which it is mounted and the other side of the base supports the nut element. The base is substantially solid in this example, except for the fastener opening described herein. In some configurations, nut element rotation may made more difficult or otherwise limited, such as by making the upper base surface textured, knurled, roughened or otherwise non-smooth. For example, pivoting can be reduced by such surface configurations in combination with non-smooth surfaces on the bottom of the nut element 104. If the bottom of the nut element 104 remains smooth, the nut element pivots easier than if it was also non-smooth.

The base 108 also supports a support structure 130 (FIGS. 1, 3, 7, 8 and 11). The support structure 130 also supports the nut element 104. The support structure 130 provides bearing support surfaces that accommodate torque loading applied when the nut is under torque. The support structure 130 also allows the nut element 104 to float a desired amount along an axis substantially perpendicular to the base 108. The support structure 130 forms a partial enclosure for the nut element 104 and includes side walls, left side wall surface 132 and right side wall surface 134, and upper wall surface 136. The side wall surfaces and the upper wall surface allow the nut element to pivot and to float. The left and right side wall surfaces are formed in the present examples as each having a full radius from the upper base surface 126 to the upper wall surface 136. They can also be formed each with two half radius portions connected by a substantially straight side wall or otherwise. The left and right side wall surfaces extend substantially straight between and perpendicular to the front and rear surfaces 122 and 124, respectively. The side wall surfaces and the upper wall surface along with the upper base surface 126 form a partial enclosure for the nut element and retain the nut element within the partial enclosure while limiting movement of the nut element both parallel to a plane defined by the upper base surface 126 and axially thereto.

The left and right side wall surfaces are supported by left and right side walls 138 and 140, respectively (FIG. 11). The left and right side walls are substantially identical mirror images of each other, and only one will be described. Specifically, the left side wall 138 extends upwardly from the base 108 to an upper surface 142 and outward from the left side wall surface 132 to the left side 118. Additionally, the left side wall 138 extends from the front surface 122 of the base 108 to the back surface 124, and has respective front and back walls substantially co-incident with the walls of the base 108. The upper surface 142 can extend outward substantially parallel to the lower surface 110 of the base 108 to the left side 118, but in the present example, the upper surface 142 slopes downward from a line 144 outboard of the left side wall surface 132 to a curved line 146. In the present example, the lowest point of line 146 is approximately at a midpoint in the left side wall surface 132 between the upper base wall 126 and the upper surface 136. In this configuration, the left side wall supporting the left side wall surface 132 extends substantially from the left side wall surface 132 to the left side 118 for supporting torque loading that may be applied by the nut element 104. In the configuration where the openings 116 are included in the nut plate, the left side wall extends around the respective opening.

The opening 116 is a bore having a substantially cylindrical side wall 148 extending from the outward facing surface 110 upward to a counter bore 150 (FIG. 11), though it should be understood that the counter bore 150 can instead be a countersink, a chamfered surface, a radiused transition, a raised boss or rim or other structure, or it can be omitted entirely. The cylindrical side wall 148 and counter bore 150 join at approximately the level of the curve 146. Both the bore and the counter bore 150 are preferably substantially circular. The bore and counter bore receive appropriate fasteners or other attachment means for substantially fixing the nut plate to the support surface. The openings in the present example are arranged on opposite sides of the nut 104. However, they can be positioned on the same side or at an angle relative to each other about the nut 104. Where the openings 116 are omitted, the side walls extend from the side wall surfaces to the respective outer sides.

The left and right side walls extend toward each other over the upper base surface 126 and join at a bridge portion 152 (FIGS. 1, 3, 5, 8 and 11). The left and right side walls and the bridge portion together are configured to define a partially circular wall 154 defining an opening 156 for aligning a barrel of the nut element, described more fully below. The opening 156 has a reduced-width entrance 158 to allow the barrel of the nut element to be press fit through the entrance and into the opening 156. Because of the minimum spacing defining the entrance being somewhat smaller than the outside diameter of the barrel, the barrel will not come out of the opening without a similar guiding force. The minimum spacing is defined by respective opposite walls 160 and 162 (FIGS. 1 and 12), which may be flat, pointed, rounded or other configurations for providing an entrance while helping to keep the nut in the opening 156. The lead in to the entrance 158 is defined by a pair of diverging walls 164 and 166 extending outwardly from the respective sides of the entrance to the front sides of the side walls. The diverging surfaces help guide the nut into the opening 156.

The opening 156 is larger than but co-axial with an opening 168 in the base 108. The opening 168 is formed by a completely circular wall through the base. The opening 168 receives the fastener 106 for threading into the nut element 104.

The partial enclosure for the nut element may include a boss, post, column or rib 170. The column 170 extends upward from the upper base surface 126, and in the present example extends upward to the surface 136 and supports the bridge portion 152. The column 170 is substantially centered between the left and right side wall surfaces 132 and 134, respectively, and includes similarly radiused surfaces. The upper base surface 126, the column 170, the upper surface 136 and the left and right side wall surfaces define between them left and right openings 172 and 174 (FIG. 8) for receiving respective projections, points or tabs on the nut element 104. The width of the openings 172 and 174 are selected according to the desired pivoting movement to be allowed for the nut element. The height of the openings are selected according to the desired float for the nut element. In the present configuration, the configurations of the side surfaces of the column 170 and the inside wall surfaces 132 and 134 define the cross-sectional configurations of the openings, but the opening configurations can be different than the configurations of the side wall surfaces.

In the configuration shown in the drawings, the nut plate has at least the portion between the lines 144 symmetric about a longitudinal vertical plane such as that defined by the line 12-12 in FIG. 6. This configuration shown in FIGS. 1-13 also has the entire nut plate symmetric about that plane. The nut plate is asymmetric about a vertical transverse plane defined by a line 11-11 in FIG. 6, because the present example does not have a front column corresponding to the column 170, and the entrance 158 omits a bridge portion corresponding to the bridge portion 152. Therefore, the nut plate is asymmetric relative to a vertical transverse plane defined by the line 11-11. The nut plate is also asymmetric relative to a horizontal plane, such as that defined by line 13-13 in FIG. 7. The edge portions of the nut plate surfaces may all be radiused, if desired.

When the nut element 104 is in place as shown in FIG. 1-3, the side wall surfaces 132 and 134 and the column 170 provide limiting elements, bearing elements, bearing surfaces or barriers limiting movement of the fastener element. They limit pivoting movement of the nut element. When the nut element pivots, the bearing surfaces provide three points of contact or three areas of contact (104a, 104b and 104c in FIG. 13) for receiving the torque loading applied by the nut element when the fastener is tightened down. Depending on the angular direction in which the nut element pivots (counterclockwise as viewed in FIG. 13), the loading is supported by one side or the other of the column 170 and by the side walls 138 and 140 (FIGS. 11 and 13).

The nut element 104 (FIGS. 1-4) includes a base 176 supporting a generally cylindrical internally threaded portion in the barrel 178. The barrel extends from the base 176 to an end surface 180 defining an opening for the barrel. The barrel may be substantially cylindrical in its inside and outside profile, or the barrel can be crimped to increase the frictional engagement with the fastener (for example 106). In an alternative configuration, the nut can also be a beam locking nut, or other nut configurations.

In the present example, the base 176 of the nut has a substantially smooth, flat bottom surface and a substantially smooth, flat upper surface. The upper surface curves from the flat surface upward to the outer perimeter surface of the barrel 178. The nut element 104 includes tips 180 extending outward from the base 176. The tips 180 can take the form of projections, pads, arms, extensions, points, cam surfaces, eccentricities or other surfaces which keep the base from having a circular perimeter. The tips 180 are arranged in pairs on each side of a transverse plane and each pair extends along a longitudinal plane. The tips 182 and 184 in the first pair extend in a direction opposite to the tips 186 and 188 in the other pair. The tip 182, and each tip in the example of the nut 104, includes a substantially straight wall 190 forming an inside surface of the tip 182, and an angled surface 192 forming an outside surface of the tip 182. The straight and angled surfaces end at a transverse flat end wall 194. Depending on the configuration of the nut support, pivoting of the nut 104 may cause the straight surface 190 to contact a bearing surface, the angled surface 192 to contact a corresponding bearing surface, or the respective junctions between those walls and the end wall 194 to contact a bearing surface. Additionally, some configurations may have the flat end wall 194 contacting a bearing surface.

The nut 104 in the present example is a conventional nut such as that shown and described in U.S. Pat No. 6,854,941, incorporated herein by reference. The nut in the patent is formed from metal and is symmetric about both the transverse and longitudinal planes. Consequently, the nut can be inserted into the receptacle in two orientations, one 180 degrees apart from the other. The nut 104 can have the same configuration if desired.

The nut is inserted into the nut receiving area by directing one pair of the tabs of the nut between the surfaces 164 and 166. The barrel 178 is pressed through the opening 158. The tabs 186 and 188 are guided into the openings 172 and 174, respectively. As the nut element moves into position with the tabs 186 and 188 in the openings 172 and 174, the nut settles onto the upper base surface 126. The nut element can be removed by pressing the barrel 178 of the nut element out of the opening 158.

In the present examples, the nut support is formed from a non-metal material. In the present examples, one material is TORLON, and other polyamide imides as well as other structural plastics or polymers can be used, including but not limited to among others; Vespel or Aurum (PI), Ultem (PEI), Victrex or Ketaspire (PEEK), Primospire (SRP), Polycarbonate, or Epoxide or Phenolic synthetic resins. The material can also be a composite material and may include fiber reinforcement or other strengthening materials. In these examples, only the nut and the fasteners securing the nut plate, if fasteners are used to secure the nut plate, are formed from a metal. Nut plates formed from non-metal materials with these or similar characteristics provide relatively high strength, and long lasting components that have relatively high resistance to corrosion. Additionally, molding of nut plates using such materials also permits manufacture of a number of nut plate configurations that can incorporate easily one or more of the features described herein.

The nut element is formed from metal and is symmetric about both the transverse and longitudinal planes. Consequently, the nut can be inserted into the nut plate in two orientations, one 180 degrees apart from the other. Other nut element configurations can be used, with or without changes in the nut plate configuration. For example, the nut element could be made asymmetric as well as having other configurations.

As with any of the configurations of the nut plates described herein, the structures supporting and retaining the nut, for example a nut receptacle, can be configured with a number of bearing surfaces against which projections or contact surfaces on the nut can bear when the nut is under torque, for example bosses, cavities, openings, walls and the like. These bearing surfaces can also include flats or other non-circular portions. Additionally, the nut plates and the nut elements both can be configured, though they need not be, to be at least in part complimentary with each other. For example, the nut 104 includes tabs that fit into the openings 172 and 174 of the nut support, and side walls in the base. The tabs and the sidewalls of the nut base substantially simultaneously bear against and are supported against further pivoting by complimentary surfaces in the nut support. For example, if the nut element has tabs in the form of star points, the nut support may have a plurality of convergent surfaces or walls so that at least some of the nut element surfaces on the star points contact respective ones of the convergent surfaces substantially simultaneously when the nut element pivots. Where the nut element includes a plurality of rounded tabs, for example lobes, the nut support can include rounded bearing surfaces. If the nut element has squared off tabs with straight side walls, the complimentary bearing surfaces on the nut support can also have flat bearing surfaces. Other combinations can also be used.

While any of the nut plate combinations described herein can rotationally fix the nut in place during normal usage, it is preferred to allow some rotational movement of the nut relative to the receptacle. Additionally, it is also preferred that when the nut is under torque, any projections or tabs or other surfaces that are intended to engage bearing surfaces on the nut support when the nut is under torque preferably contact those bearing surfaces substantially simultaneously, or if not simultaneously, all of the surfaces intended to engage bearing surfaces on the receptacle achieve the intended engagement.

In one example of the nut plate 102, the height or thickness of the base 108 can occupy about one-third of the overall height of the nut plate. The distance or spacing between the upper base surface 126 and the upper surface 136 may occupy about another third of the overall height of the nut plate. The thickness of the bridge portion 152 between the upper surface 136 and the surface 142 may occupy about another third of the overall height of the nut plate. Additionally, the spacing between the walls 132 and 134 may be between one-third and one-half the overall width of the nut plate between the ends 118 and 120. The remainder of the width is split substantially equally between the side walls 138 and 140.

To assemble the combination, the nut assembly 100 of FIG. 1 is fastened to the support element 112 so that the opening 168 is substantially coaxial with an opening in the support element. The fastener 106 is pressed through the opening in the panel 114 and threaded into the nut 104. When the fastener 106 first encounters the threads of the nut, the nut element is biased away from the panel 114, until the threads of the fastener 106 engage and advance into the nut element 104. Further threading of the fastener 106 pulls the nut against the upper surface 126 of the base 108. Further threading of the fastener 106 also pulls the panel 114 against the support element 112 and secures all the components together.

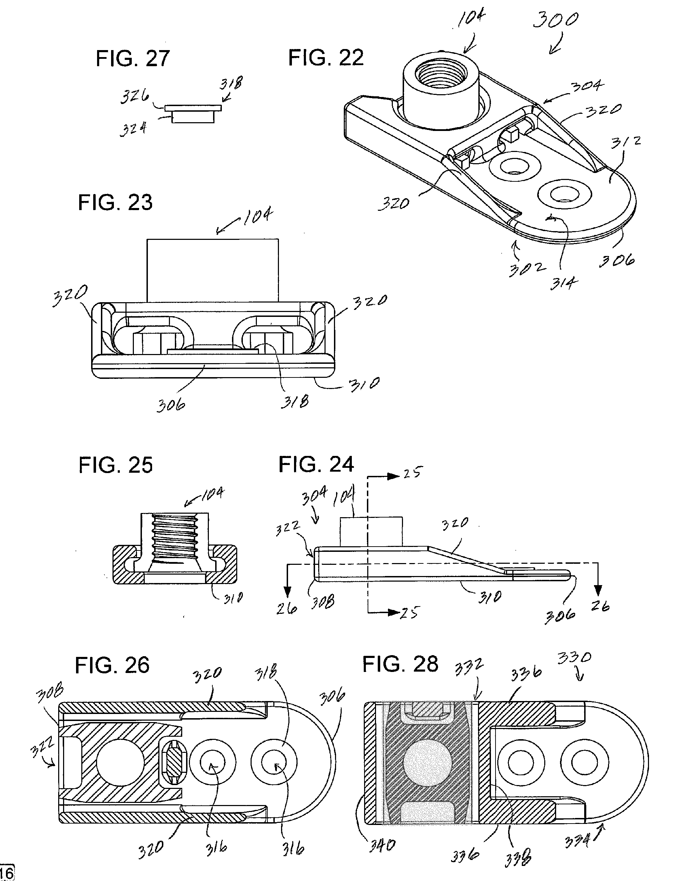

In a further example of a fastener and receptacle combination in the form of a nut plate combination, nut plate 300 (FIGS. 22-27) provides a side-load nut assembly and a single lug or mounting tab for the configuration. The nut plate will be considered as having a configuration for receiving and supporting a nut such as nut 104 (FIG. 5), but the nut plate can be configured for receiving and supporting other nut configurations.

The nut plate 300 includes a base 302 supporting a nut cage 304 for receiving and supporting a nut 104. The base 302 is configured to be mounted on an underlying support structure, such as that described with respect to FIG. 14. The internal structure of the nut cage 304 is substantially the same as that described with respect to FIGS. 1-13, and the height of the base 302, the height of the cage side walls and the height (or material thickness) of the upper support wall are substantially the same as those described with respect to FIGS. 1-13.

In the present example, the base 302 is substantially planar and extends from a right end 306 to a left end 308. The base includes a bottom support surface 310 placed against an underlying support structure and secured thereto. The upper surface 312 of the base supports the cage 304.

The base includes a single lug 314. Two openings 316 are formed through the lug 314 for receiving rivets or other fasteners for mounting the nut plate to the underlying structure. A single opening or more than two openings can be used, as desired, and the number, size and location may be selected as a function of the expected loading, the available space, and whether other securing means are used, such as adhesive or bonding agents. A single lug nut plate may be useful in limited space applications, along surface edges or corners or interior to the edges of a structure. In the present example, both openings are located on the same side of nut element, as opposed to on opposite sides or at an angle relative to the nut element, which are also possible. Each hole can include a respective eyelet 318 (FIGS. 22-24 and 26-27) for example when significant loading is expected or when fasteners are used formed from a material harder than the material of the lug of the nut plate.

One or more reinforcing walls 320 can be included for supporting the nut cage 304 relative to the base 302. In the present example, the reinforcing walls 320 extend from the right side of the nut cage 304 to the upper surface of the base 302, on respective sides of the openings 316. The reinforcing walls 320 slope downwardly from the upper surface of the cage to the upper surface of the base 302. The reinforcing walls have a substantially constant slope downward and terminate approximately at a mid portion of the rightmost opening 316. As shown in FIG. 26, the reinforcing walls have approximately the same material thickness as that for the nut cage side walls. However, the thickness can be different if desired.

The access opening 322 (FIGS. 24 and 26) for the nut cage in the present example is positioned at a side of the nut plate, rather than at a front or rear of the plate. In the present example, the nut 104 is inserted in and removed from the cage through only the single access opening 322, and following a path that is substantially parallel to the upper surface of the base 302. However, locating the access opening 322 and suitable guiding of the nut 104 may be made easier by slightly tilting the nut 104 until tabs of the nut contact the upper surface of the base 302 followed by insertion parallel to the upper surface.

In the examples of the nut plates described herein, eyelets such as eyelet 318 (FIG. 27) can be used in conjunction with securement openings in the nut plate. The eyelets 318 shown in FIGS. 22-24 and 26-27 include a cylindrical portion 324 extending part or all of the way into the opening 316. A rim or flange 326 extends outwardly from an end portion of the cylindrical portion 324, for example for overlying or protecting a portion of the upper surface of the base 302. The rim 326 can also be recessed or set into the upper surface so that the top surface of the rim is flush with the upper surface of the base. Other eyelet configurations can also be used.

Other lug arrangements can be used with the side-loading nut cage. Additionally, other nut loading configurations can be used with the single lug securement configuration. For example, as shown in FIG. 28, an alternative nut plate 330 with a front-loading cage 332 configuration is included on a single lug base 334. The reinforcing walls 336 are thicker than the vertical walls 338 and 340 of the cage 332, but the nut plate 330 can be otherwise identical to the nut plate 300.

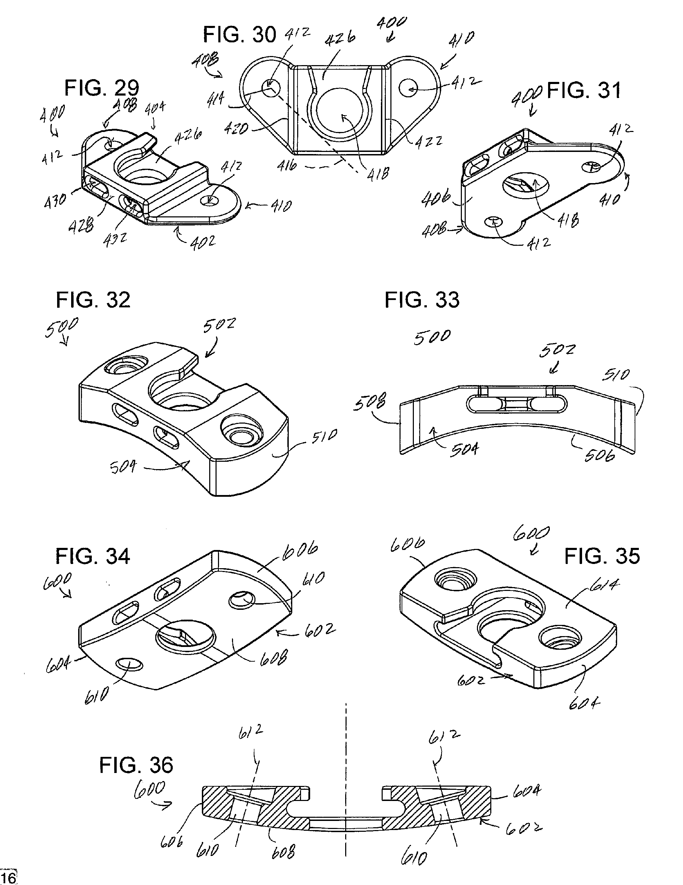

In another example of a fastener receptacle support, a receptacle for a nut plate combination is shown in FIGS. 29-31. The receptacle 400 is configured to accommodate the nut 104 described with respect to FIG. 4, but the receptacle can be configured to accommodate a nut having other configurations. The nut 104 is not shown with the receptacle 400, but it is understood that the nut 104 can be inserted into and removed from the nut cage and would be supported in the nut cage in a manner substantially the same is that described above with respect to the nut in FIG. 4.

The receptacle 400 includes a base 402 supporting a cage 404. The base includes a bottom support surface 406 that will be placed against and secured to an underlying support structure. The base includes a right lug 408 and a left lug 410, each extending away from respective sides of the cage 404. The receptacle 400 is considered to have a front-loading cage 404 so that the lug 408 is on the right side and the lug 410 is on the left side of the cage.

Each lug includes a respective opening 412 that can be used to assist in securing the receptacle to the underlying support structure. Each opening 412 can be considered as being centered approximately equidistant from the external sides of the respective lug, for example the distance defined by a radius 414 from a center of the opening to the outside of the rounded edge of the respective lug. In the lug configuration shown in FIGS. 29-31, each lug is directed forward toward the front of the receptacle so as to be directed at an angle (represented by the angle formed between the line 416 in FIG. 30 and the right side of the cage 404) from the adjacent side of the cage 404. As a result, each opening 412 is positioned closer to the front of the cage than to the rear of cage. Additionally, each lug includes a portion that extends forward of the front of cage, in the present example. The receptacle can be used to support a fastener element near a corner of a panel, for example. An opening 418 is formed through the base for receiving an appropriate portion of a fastener element, as is typical for nut plates.

The base 402 supports the nut cage 404. The nut cage includes a right side wall 420 and a left side wall 422 extending upward from the upper surface of the base 402 to an upper panel 424. The interior structural details of the nut cage are substantially identical to those described above with respect to the nut plates of FIGS. 1-14 and 22-28. For example, the interior of the nut cage 404 includes a substantially planar nut support surface 426, radiused internal side walls facing each other and extending upward to the upper panel 424 and a boss, post, column, or rib 428. The column 428 extends from the nut support surface 426 to the upper panel surface 424 and defines respective openings 430 and 432 for receiving and supporting respective tabs on a nut 104.

The respective heights of the base, the internal side walls of the cage and of the upper panel 424 (or its material thickness) are preferably comparable to the relative dimensions of those structures described with respect to the other cages described herein. For example, the height or material thickness of the base 402 is approximately one-third of the overall height of the receptacle, as is the height or material thickness of the upper panel 424, leaving the remaining approximately third of the height taken up by the interior of the cage.

The side wall thicknesses of the side walls 420 and 422, namely the material thickness between the interior wall surfaces of the side walls and the exterior wall surfaces of the side walls can be selected to reliably support any loading applied from the tabs of a nut 104 when under loading. In the example shown in FIGS. 29-31, the side walls are radiused on the inside and straight on the outside with transition radii to and from adjacent surfaces. In an alternative configuration, the side walls can slant or slope downwardly to join the upper surfaces of the adjacent lugs 408 and 410. In another example, the side walls can extend sideways to the outer edge surfaces of the respective lugs.

Forming, assembling and installing a nut plate assembly having the receptacle 400 can be accomplished in a manner the same as or similar to the other examples described herein.

In another example of a fastener receptacle such as a receptacle for receiving and supporting a fastener element, a receptacle 500 (FIGS. 32-33) is substantially identical to the receptacle 102 described with respect to FIGS. 1-14. The receptacle 500 receives and supports the nut 104 through a front-loading configuration with the cage 502 on a support 504. In the present example, the support 504 includes a downwardly-facing concave support surface 506 so that the support surface 506 is not planar. The curved support surface 506 allows the receptacle to be mounted on curved surfaces. In the configuration of the receptacle 500 shown in FIGS. 32-33, the curvature is with respect to a minor axis extending in the front-to-rear direction, with the right and left sides 508 and 510, respectively, curving away from and extending on opposite sides of the minor axis. The curvature of the support surface 506 is substantially constant as shown in FIGS. 32 and 33. In another example, the curvature can be concave relative to a major axis extending between the left and right sides of the receptacle, with the front and rear portions of the receptacle extending on opposite sides of the major axis. Alternatively, the curvature can be varied to accommodate the particular surface configuration of the underlying support structure.

In another example of a fastener receptacle such as a receptacle for receiving and supporting a fastener element, a receptacle 600 (FIGS. 34-36) is substantially identical to that described with respect to FIGS. 15-18, except as described with respect to this example and without the front and rear support elements 210 and 212. Additionally, the cage configuration, and therefore the intended nut configuration for use therewith, corresponds to the nut 104. However, the cage and nut configuration can be incorporated similar to that described with respect to FIGS. 15-21, or other nut configurations. In the example of the receptacle 600, the base 602 extends front to rear and from the right side 604 to the left side 606. The base 602 includes a convex support surface 608 so that the support surface 608 is not planar. The curved support surface 608 allows the receptacle to be mounted on curved surfaces that are concave. In the configuration of the receptacle 600 shown in FIGS. 34-36, the curvature is with respect to a minor axis extending in the front-to-rear direction, with the right and left sides 604 and 606, respectively, curving away from and on opposite sides of the minor axis. The curvature of the support surface 608 is substantially constant as shown in FIGS. 34 and 36. In another example, the curvature can be convex relative to a major axis extending between the left and right sides of the receptacle, with the front and rear portions of the receptacle curving away from and on opposite sides of the major axis. Alternatively, the curvature can be varied to accommodate the particular surface configuration of the underlying support structure.

As shown in FIG. 36, the receptacle 600 can include openings 610 having central axes 612 configured so that the axes extend normal to the support surface 608. In such a configuration, fasteners used to secure the receptacle 600 to the underlying support structure would extend normal to the underlying surface of the support structure adjacent the support surface 608. As a result, the fasteners and the surrounding support structure material may experience less side loading than if the fasteners were oriented otherwise. Alternatively, the openings and their central axes 612 can be oriented normal to the upper surface 614 of the receptacle 600 or at another angle. Additionally, the receptacle 500 shown in FIGS. 32 and 33 can also have their openings oriented normal to the underlying support surface 506 at the point where the openings exit the support surface 506. Other configurations are also possible.

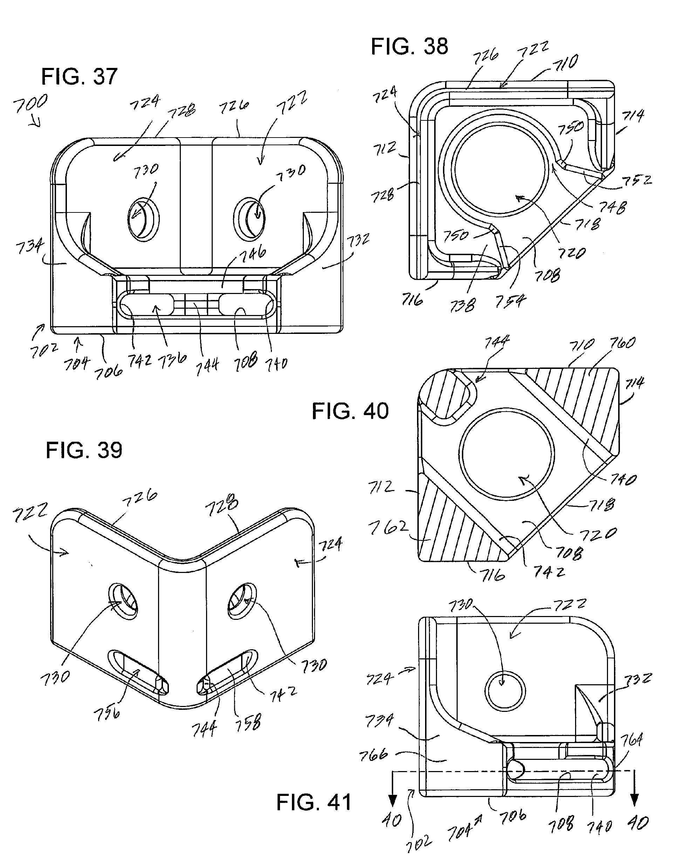

In another example of a fastener receptacle for receiving and supporting a fastener element, a receptacle 700 (FIGS. 37-41) can be used to mount a component or other structure adjacent a corner of two other structures, for example adjacent a corner in two panels. In the present example, the receptacle 700 includes a base 702 that includes a bottom surface 704 forming a support surface 706 that is placed against an underlying support structure. In this receptacle, the support surface 706 is substantially planar to be placed against a correspondingly planar portion of a support structure. In the present example, the base is also substantially planar and has a uniform height or material thickness from the support surface 706 to the plane defined by a nut support surface 708. The base has a pentagon shape with two substantially equal-length right and left rear sides 710 and 712, respectively, and two substantially equal-length right and left front sides 714 and 716, respectively, the latter two of which are joined by front side 718. The right and left front sides are shorter in length than the right and left rear sides. As with each of the fastener element receptacles or receptacles described in these examples, the base 702 also includes an opening 720 for receiving a shank, shaft or other fastener element to be engaging the nut supported in the cage, described more fully below.

The receptacle 700 includes a least one, and in the present example two, securement portions on the base for helping to secure the receptacle relative to the support structure. In the present example, a right securement portion 722 and a left securement portion 724 are supported by and extend upwardly from the base 702. The right securement portion 722 extends upwardly from the base adjacent the right rear side 710, and the left securement portion 724 extends upwardly from the base adjacent the left rear side 712. They extend upward to upper edges 726 and 728, respectively. Each securement portion includes at least one, and if desired a plurality of, openings 730 for use in securing the receptacle to a support structure. The openings can be used to secure the receptacle in the same way that other receptacles described herein are secured. In the example shown in FIGS. 37-41, the right and left securement portions are substantially square with radiused edges and corners, and they allow the receptacle to be mounted to one or two support structures. In the case of being mounted to two support structures, the two support structures would be adjacent each other forming an approximate junction, such as a right angle corner. Other configurations of securement portions may be used, for example forming the securement portions as other than square configurations.

Each securement portion is coupled to the base and to the adjacent cage portion end by a reinforcement wall, such as right reinforcement wall 732 and left reinforcement wall 734. The upper portions of the reinforcement walls slope downwardly from approximate mid points of the securement portions to an upper portion of a fastener cage 736 (FIGS. 37-38), at an upper wall surface 738. The thickness of the reinforcement walls can be approximately the same as the thickness of the securement portions, as shown in the drawings, or the thicknesses can be different.

The base 702 also supports the cage 736 that supports a nut element, such as nut element 104. The cage extends above the nut support surface 708 and is configured to allow front loading of the nut into the cage. The interior surfaces of the cage are substantially similar to those for the cage described with respect to FIGS. 1-13, and include the substantially planar nut support surface 708, right and left radiused side wall surfaces 740 and 742 (FIG. 37) and a post or column 744 (FIG. 38). The right and left side wall surfaces and the post 744 extend upwardly from the nut support surface 708 to the upper cage wall 746, whose upper surface 738 forms the top surface of the cage. The upper cage wall includes a partially circular opening 748 (FIG. 38) defining an axially-extending opening for receiving and supporting a fastener element body such as the nut body 178. The opening 748 includes a restricted entrance defined by entrance walls 750 having a structure and function similar to that described with respect to walls 160 and 162. Approach ramp walls 752 and 754 help to guide the nut body into the opening 748.

The post 744 and the interior side walls 740 and 742 in the cage help to define right and left rear openings 756 and 758, respectively. The openings receive respective tabs on the nut element 104, which bear against respective surfaces when the nut pivots. For example, if the nut pivots in a counterclockwise direction as viewed from the perspective of FIG. 38, one tab will contact the post 744 and another tab will contact the left side wall surface 742. Additionally, one tab will contact the right side wall surface 740 near the front. When the contacts occur simultaneously, there will be three bearing surfaces limiting pivoting movement of the nut.

The right and left interior side walls 740 and 742 of the cage 736 are supported by support material 760 and 762, respectively, extending between the side wall surfaces and the right and left outside surfaces 764 and 766, respectively, of the cage. Portions of the support material are shown in a cross-section of FIG. 40 and extend vertically substantially the distance from the nut support surface 708 to the underside surface of the upper cage wall 746. The support material formed by the side walls form a substantial amount of bearing support for the interior side wall surfaces of the cage. As a result, the bearing surfaces against which corresponding surfaces of the nut bear under torque can withstand significant loading.

In the receptacle 700, three-points of contact are provided for limiting pivoting movement of the nut, and for releasably retaining the nut in the cage. The relative heights or material thicknesses of the cage elements and the base have the base forming an approximate third of the height of the base and cage combination, the upper cage wall 746 forming an approximate third of the height in the cavity in the cage for receiving the base of the nut forming an approximate other third. The cage also forms a back wall for the nut body limiting the directions in which the nut can be inserted into cage. As in all of the examples described herein for the base, such as base 702, the base is substantially incompressible, and in some examples inflexible, and reliably supports the nut at approximately the same height relative to the underlying structure under the base 702.

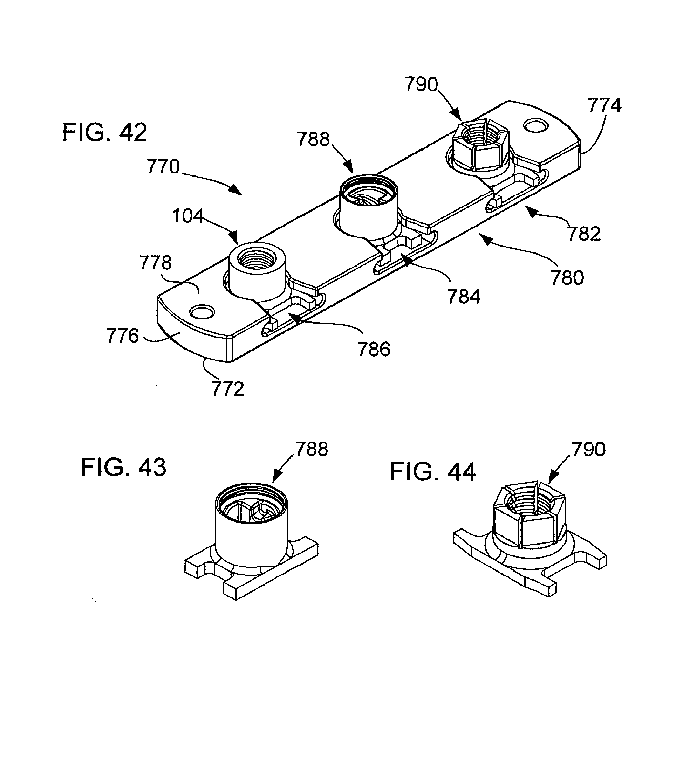

Any of the fastener element receptacles described herein can be configured to accommodate more than one fastener element. As shown in FIG. 42, fastener element receptacle 770 includes a base 772, a right side wall 774, left side wall 776 and an upper wall 778. The front 780 includes a first, second and third cage areas 782, 784 and 786, respectively, for receiving corresponding fastener elements. In the present example, the fastener elements include the nut element 104, a quarter-turn receptacle 788 (FIG. 43) and a cycle nut 790 (FIG. 44). The nut element 104 shown in FIG. 42 includes serrations on the bottom surface thereof for having multiple points of contact between the nut element and the underlying support surface. The other fastener elements described herein can also have non-flat bottom surfaces as well, and may include other textured surface configurations. The same or different fastener elements can be incorporated into a multiple receptacle such as shown in FIG. 42. Each cage area can be identical or can be configured to accommodate a particular type of fastener element. The multiple receptacle can otherwise include any of the features described herein with respect to the other receptacles.

## Claims

1. A fastener receptacle comprising:
a non-metal base (108, 302, 402, 502, 602, 702, 772) and at least one fastener cage integral with each other, wherein the base has a support surface (110, 310, 506, 608, 706) configured to be placed against a support structure, a first opening (168, 418, 720) for receiving a male fastener, and further including a fastener support surface (126, 312, 426, 708) configured such that the first opening extends from the support surface to the fastener support surface, the fastener cage having two side walls (132, 134; 420, 422; 740, 742) and an upper wall (136, 424, 738) spaced apart from the fastener support surface, the upper wall extending between and contacting the two side walls,
wherein the upper wall (136, 424, 748) defines a second opening (156, 748) for receiving a fastener element body (178) of a female fastener, coaxial with the first opening,
wherein the second opening (156, 748) includes a reduced-width entrance (158, 322, 750) adapted to allow insertion of the female fastener into and removal of the female fastener from the fastener cage, when a guiding force is exerted on the female fastener,
**characterised in that** it further comprises a column (170, 428, 744) extending upward from the fastener support surface to the upper wall and between the two side walls, said column defining two rear openings (172, 174; 430, 432; 756, 758) in the at least one fastener cage for receiving respective projections (180 - 188) of the female fastener (104, 788, 789), when the female fastener is positioned in the fastener cage, wherein the reduced-width entrance faces the two rear openings, the side wall surfaces and the column forming bearing elements providing three points of contact for receiving a torque loading applied by the female fastener when the male fastener is tightened down.

2. The fastener receptacle of claim 1 wherein the support surface (506, 608) is curved.

3. The fastener receptacle of claim 1 wherein the support surface (110, 310, 706) is flat.

4. The fastener receptacle of any previous claim wherein the non-metal base (108, 302, 402, 602, 702, 772) includes at least one opening (116, 316, 412, 610) for mounting the base to the support structure.

5. A fastener assembly **characterized in that** it includes a fastener receptacle of any previous claim and a female fastener (104, 788, 789) having a base (108) bearing on the fastener support surface of the fastener receptacle, and two tips extending outward from the base into the two rear openings (172, 174; 430, 432; 756, 758) of the fastener receptacle.

6. The fastener assembly of claim 6 wherein the female fastener is chosen among a nut plate, a quarter-turn receptacle and a cycle nut.

7. The fastener assembly of claim 6 configured so that pivoting of the female fastener relative to the fastener receptacle brings the fastener into contact with at least three different bearing (104a, b, c) surfaces.

8. A method of securing a fastener receptacle on a support structure comprising:
- placing the fastener receptacle of any claim 1 to 4 against the support structure,
- inserting by press-fit a female fastener having a base (108) bearing on the fastener support surface of the fastener receptacle, and two tips extending outward from the base into the two rear openings (172, 174; 430, 432; 756, 758) of the fastener receptacle;
- securing the fastener receptacle to the support structure by at least one of bonding and structural securement; and
- engaging a male fastener element (106) with the female fastener.

## Patentansprüche

1. Befestigungselementaufnahme, umfassend:
eine nichtmetallische Basis (108, 302, 402, 502, 602, 702, 772) und mindestens einen Befestigungselementkäfig, die miteinander integral sind, wobei die Basis eine Stützfläche (110, 310, 506, 608, 706), die dazu konfiguriert ist, gegen eine Stützstruktur platziert zu werden, und eine erste Öffnung (168, 418, 720) zur Aufnahme eines männlichen Befestigungselements hat und ferner eine Befestigungselement-Stützfläche (126, 312, 426, 708) aufweist, die so konfiguriert ist, dass sich die erste Öffnung von der Stützfläche zu der Befestigungselement-Stützfläche erstreckt, wobei der Befestigungselementkäfig zwei Seitenwände (132, 134; 420, 422; 740, 742) und eine obere Wand (136, 424, 738) hat, die von der Befestigungselement-Stützfläche beabstandet ist, wobei sich die obere Wand zwischen den beiden Seitenwänden erstreckt und diese kontaktiert,
wobei die obere Wand (136, 424, 748) eine zu der ersten Öffnung koaxiale zweite Öffnung (156, 748) zur Aufnahme eines Befestigungselementkörpers (178) eines weiblichen Befestigungselements definiert,
wobei die zweite Öffnung (156, 748) einen Eingang (158, 322, 750) mit verringerter Breite aufweist, der geeignet ist, das Einführen des weiblichen Befestigungselements in den Befestigungselementkäfig und das Entfernen des weiblichen Befestigungselements aus dem Befestigungselementkäfig zu gestatten, wenn eine Führungskraft auf das weibliche Befestigungselement ausgeübt wird,
**dadurch gekennzeichnet, dass** sie ferner eine Säule (170, 428, 744) umfasst, die sich von der Befestigungselement-Stützfläche nach oben zu der oberen Wand und zwischen den beiden Seitenwänden erstreckt, wobei die Säule zwei hintere Öffnungen (172, 174; 430, 432; 756, 758) in dem mindestens einen Befestigungselementkäfig zur Aufnahme von jeweiligen Vorsprüngen (180 - 188) des weiblichen Befestigungselements (104, 788, 789) definiert,
wenn das weibliche Befestigungselement im Befestigungselementkäfig positioniert ist, wobei der Eingang mit verringerter Breite den beiden hinteren Öffnungen zugewandt ist, wobei die Seitenwandflächen und die Säule Lagerelemente bilden, die drei Kontaktpunkte zur Aufnahme einer Drehmomentbeaufschlagung bereitstellen, die vom weiblichen Befestigungselement ausgeübt wird, wenn das männliche Befestigungselement festgezogen wird.

2. Befestigungselementaufnahme nach Anspruch 1, wobei die Stützfläche (506, 608) gekrümmt ist.

3. Befestigungselementaufnahme nach Anspruch 1, wobei die Stützfläche (110, 310, 706) flach ist.

4. Befestigungselementaufnahme nach einem der vorhergehenden Ansprüche, wobei die nichtmetallische Basis (108, 302, 402, 602, 702, 772) mindestens eine Öffnung (116, 316, 412, 610) zum Montieren der Basis an die Stützstruktur aufweist.

5. Befestigungselementanordnung, **dadurch gekennzeichnet, dass** sie eine Befestigungselementaufnahme nach einem der vorhergehenden Ansprüche und ein weibliches Befestigungselement (104, 788, 789) mit einer Basis (108), die an der Befestigungselement-Stützfläche der Befestigungselementaufnahme anliegt, und zwei Spitzen aufweist, die sich von der Basis nach außen in die zwei hinteren Öffnungen (172, 174; 430, 432; 756, 758) der Befestigungselementaufnahme erstrecken.

6. Befestigungselementanordnung nach Anspruch 6, wobei das weibliche Befestigungselement aus einer Mutterplatte, einer Vierteldrehungsaufnahme und einer Radmutter ausgewählt ist.

7. Befestigungselementanordnung nach Anspruch 6, dazu konfiguriert, dass das Schwenken des weiblichen Befestigungselements bezüglich der Befestigungselementaufnahme das Befestigungselement mit mindestens drei verschiedenen Lagerflächen (104a, b, c) in Kontakt bringt.

8. Verfahren des Befestigens einer Befestigungselementaufnahme an einer Stützstruktur, umfassend:
- Platzieren der Befestigungselementaufnahme nach einem der Ansprüche 1 bis 4 an der Stützstruktur,
- Einführen eines weiblichen Befestigungselements durch Einpressen, das eine Basis (108), die an der Befestigungselement-Stützfläche der Befestigungselementaufnahme anliegt, und zwei Spitzen hat, die sich von der Basis nach außen in die zwei hinteren Öffnungen (172, 174; 430, 432; 756, 758) der Befestigungselementaufnahme erstrecken,
- Befestigen der Befestigungselementaufnahme an der Stützstruktur durch Bonden und/oder strukturelle Befestigung und
- Eingreifen eines männlichen Befestigungselements (106) in das weibliche Befestigungselement.

## Revendications

1. Socle d'attache comprenant :
une base non métallique (108, 302, 402, 502, 602, 702, 772) et au moins une cage d'attache formant un seul bloc l'une avec l'autre, dans lequel la base comporte une surface d'appui (110, 310, 506, 608, 706) configurée pour être placée contre une structure support, une première ouverture (168, 418, 720) pour recevoir une attache mâle et comprenant en outre une surface (126, 312, 426, 708) d'appui d'attache configurée de telle sorte que la première ouverture s'étend de la surface d'appui à la surface d'appui d'attache, la cage d'attache comportant deux parois latérales (132, 134 ; 420, 422 ; 740, 742) et une paroi supérieure (136, 424, 738) à distance de la surface d'appui d'attache, la paroi supérieure s'étendant entre les deux parois latérales et étant en contact avec elles,
dans lequel la paroi supérieure (136, 424, 748) délimite une seconde ouverture (156, 748) coaxiale avec la première ouverture, pour recevoir un corps d'élément de fixation (178) d'une attache femelle,
dans lequel la seconde ouverture (156, 748) comprend une entrée (158, 322, 750) de largeur réduite agencée pour permettre l'introduction de l'attache femelle dans la cage d'attache et le retrait de l'attache femelle de ladite cage quand on exerce une force de guidage sur l'attache femelle,
**caractérisé en ce qu'**il comprend en outre une colonne (170, 428, 744) s'étendant vers le haut de la surface d'appui d'attache à la paroi supérieure et entre les deux parois latérales, ladite colonne délimitant deux ouvertures arrière (172, 174 ; 430, 432 ; 756, 758) dans l'au moins une cage d'attache pour recevoir des bossages respectifs (180 - 188) de l'attache femelle (104, 788, 789), quand on met en place l'attache femelle dans la cage d'attache, dans lequel l'entrée de largeur réduite fait face à aux deux ouvertures arrière, les surfaces de paroi latérale et la colonne constituant des éléments d'appui offrant trois points de contact pour recevoir une force de torsion appliquée par l'attache femelle quand on visse à fond l'attache mâle.

2. Socle d'attache selon la revendication 1, dans lequel la surface d'appui (506, 608) est courbe.

3. Socle d'attache selon la revendication 1, dans lequel la surface d'appui (110, 310, 706) est plate.

4. Socle d'attache selon l'une quelconque des revendications précédentes, dans lequel la base non métallique (108, 302, 402, 602, 702, 772) comprend au moins une ouverture (116, 316, 412, 610) pour monter la base sur la structure support.

5. Ensemble fixation **caractérisé en ce qu'**il comprend un socle d'attache selon l'une quelconque des revendications précédentes et une attache femelle (104, 788, 789) comportant une base (108) portant sur la surface d'appui d'attache du socle d'attache et deux pointes s'étendant vers l'extérieur depuis la base dans les deux ouvertures arrière (172, 174 ; 430, 432 ; 756, 758) du socle d'attache.

6. Ensemble fixation selon la revendication 6, dans lequel l'attache femelle est choisie parmi un plateau-écrou, un socle quart de tour et un écrou à créneaux.

7. Ensemble fixation selon la revendication 6, configuré de sorte que faire pivoter l'attache femelle par rapport au socle d'attache amène l'attache en contact avec au moins trois surfaces d'appui différentes (104a, b, c).

8. Procédé de fixation d'un socle d'attache sur une structure support comprenant les opérations de :
- placer le socle d'attache selon l'une quelconque des revendications 1 à 4 contre la structure support,
- introduire par emmanchement à la presse une attache femelle comportant une base (108) portant sur la surface d'appui d'attache du socle d'attache et deux pointes s'étendant vers l'extérieur depuis la base dans les deux ouvertures arrière (172, 174 ; 430, 432 ; 756, 758) du socle d'attache ;
- fixer solidement le socle d'attache à la structure support par collage et/ou fixation structurelle ; et
- insérer un élément d'attache mâle (106) dans l'attache femelle.
